# EUROPEAN PATENT APPLICATION

(11) **EP 4 060 828 A1**
(43) Date of publication of application: **21.09.2022**
(21) Application number: 21163626.1
(22) Date of filing: 19.03.2021
(51) Int. Cl.: H01R 13/66, H01R 13/717, B60L 53/16, H01R 13/70, H01R 27/00

(54) **FIRST ELECTRICAL CONNECTOR, SECOND ELECTRICAL CONNECTOR AND METHOD**

(71) Applicant: Vestel Elektronik Sanayi ve Ticaret A.S., 45030 Manisa (TR)
(72) Inventor: KAHYAOGLU, Mert, 45030 Manisa (TR); YALIN, Nevzat, 45030 Manisa (TR)
(74) Representative: Kehl, Ascherl, Liebhoff & Ettmayr Patentanwälte Partnerschaft mbB

(57) **Abstract**

The present disclosure provides a first electrical connector (100, 200) for coupling to a second electrical connector (350, 450, 550), the first electrical connector (100, 200) comprising a first outer enclosure (101, 201) that surrounds a first contact space (102, 202) and comprises an opening on a front side of the first electrical connector (100, 200) in longitudinal direction (112, 212) of the first contact space (102, 202), a number of first electrical contacts (103, 104, 203, 204, 205) arranged in the first contact space (102, 202) and configured to couple to second electrical contacts (353, 354, 453, 454, 553, 554) of the second electrical connector (350, 450, 550), and a light generation device (107, 207) arranged in the first contact space (102, 202) and configured to emitted light (108, 208, 308, 408) of a predetermined type. The second electrical connector (350, 450, 550) comprising a second outer enclosure (351, 451) that surrounds a second contact space (352, 452) and comprises an opening on a front side of the second electrical connector (350, 450, 550) in longitudinal direction (412) of the second contact space (352, 452), a number of second electrical contacts (353, 354, 453, 454, 553, 554) arranged in the second contact space (352, 452) and configured to couple to first electrical contacts (103, 104, 203, 204, 205) of the first electrical connector (100, 200), a light sensor (357, 457, 557) arranged in the second contact space (352, 452) and configured to sense light (108, 208, 308, 408) if the second electrical connector (350, 450, 550) is connected to a first electrical connector (100, 200), and a controller (358, 458, 558) coupled to the light sensor (357, 457, 557) and configured to determine a maximum output power (359) based on the sensed light (108, 208, 308, 408). Further, the present invention provides a respective method.

## Description

### TECHNICAL FIELD

The disclosure relates to a first electrical connector, a second electrical connector and a respective method.

### BACKGROUND

Although applicable to any electrical connector, the present disclosure will mainly be described in conjunction with electrical connectors for charging stations and charging cables of electrical vehicles.

Electrical vehicles are usually equipped with batteries that provide the electrical power to drive the electrical vehicle. These batteries may be charged via an external charging station.

Specific charging cables are usually used to couple an electrical vehicle to a charging station for charging the internal batteries of the electrical vehicle. Depending for example on the diameter of the single wires in the charging cable, the respective charging cable may have a predetermined current carrying capacity that may not be exceeded while charging a vehicle. Complex systems are available that measure the resistance of a charging cable prior to initiating the charging of the vehicle to determine the current carrying capacity of the charging cable.

Accordingly, there is a need for easily determining the current carrying capacity of a charging cable.

### SUMMARY

The above stated problem is solved by the features of the independent claims. It is understood, that independent claims of a claim category may be formed in analogy to the dependent claims of another claim category.

Accordingly, it is provided:
A first electrical connector for coupling to a second electrical connector, the first electrical connector comprising a first outer enclosure that surrounds a first contact space and comprises an opening on a front side of the first electrical connector in longitudinal direction of the first contact space, a number of first electrical contacts arranged in the first contact space and configured to couple to second electrical contacts of the second electrical connector, and a light generation device arranged in the first contact space and configured to emitt light of a predetermined type.

Further, it is provided:
A second electrical connector for coupling to a first electrical connector, the second electrical connector comprising a second outer enclosure that surrounds a second contact space and comprises an opening on a front side of the second electrical connector in longitudinal direction of the second contact space, a number of second electrical contacts arranged in the second contact space and configured to couple to first electrical contacts of the first electrical connector, a light sensor arranged in the second contact space and configured to sense light at least if the second electrical connector is connected to a first electrical connector, and a controller coupled to the light sensor and configured to determine a maximum output power based on the sensed light.

Further, it is provided:
A method for determining a maximum output power for providing electrical power from a second connector to a first connector, the method comprising generating light in a first outer enclosure of the first electrical connector that surrounds a first contact space and comprises an opening on a front side of the first electrical connector in longitudinal direction of the first contact space, sensing the generated light in a second outer enclosure of the second electrical contact that surrounds a second contact space and comprises an opening on a front side of the second electrical connector in longitudinal direction of the second contact space, and determining a maximum output power from the second electrical connector to the first electrical connector based on the sensed light.

The present invention is based on the finding, that measuring physical properties of the wires of a charging cable like e.g., the resistance of the wires, is a complex task, and that the physical properties of the wires or the contacts used to contact the wires may change over time, temperature and the like.

The present invention acknowledges this finding and provides a simple solution for determining the current carrying capacity of a first electrical connector and a cable attached to said connector.

To this end, the present invention provides the first electrical connector and the second electrical connector. In this regard it is noted, that the first electrical connector is the connector that may be coupled to a charging cable, while the second electrical connector may be coupled to the charging station. Generally, the first electrical connector may be coupled to the element for which the current carrying capacity is to be determined, and the second electrical connector may be coupled to the element that comprises the electrical power source.

The first electrical connector comprises a first outer enclosure that encloses a first contact space and accommodates a number of first electrical contacts and a light generation device. The first outer enclosure comprises an opening on a front side in longitudinal direction of the first contact space. The longitudinal direction is defined by the direction of movement of the electrical connector when the electrical connector is coupled to or mated to a respective counterpart, i.e. the second electrical connector. It is understood, that the term direction of movement in this case refers to a relative direction. This means that the second electrical connector may be moved instead of the first electrical connector. It is understood, that other electrical contacts may also be present either in the outer enclosure or outside of the outer enclosure.

The second electrical connector comprises a similar mechanical arrangement with a second outer enclosure that encloses a second contact space and accommodates a number of second electrical contacts. The second outer enclosure also comprises an opening on a front side in longitudinal direction of the second contact space. The longitudinal direction is defined by the direction of movement of the second electrical connector when the second electrical connector is coupled to or mated to a respective counterpart, i.e. the first electrical connector. It is understood, that the term direction of movement in this case refers to a relative direction. This means that the first electrical connector may be moved instead of the second electrical connector. It is understood, that other electrical contacts may also be present either in the outer enclosure or outside of the outer enclosure. Instead of a light generation device, the second electrical connector comprises a light sensor arranged in the second contact space.

It is understood, that the first electrical connector and the second electrical connector are counterparts and that, respectively, the first outer enclosure and the second outer enclosure are formed such that the two connectors may be connected to each other.

The first and the second connector may for example be connectors according to a respective standard. Exemplary connectors include, but are not limited to, J1772 connectors, Mennekes connectors, GB/T connectors, CCS1 connectors, CHAdeMO connectors, CCS2 connectors, and vendor-specific connectors.

The current carrying capacity may be determined after the first electrical connector and the second electrical connector are coupled to each other and prior to initiating charging of an electrical vehicle.

If the current carrying capacity of the first electrical connector or the cable coupled to the first electrical contact is to be determined, the light generation device may emit light of a predefined type i.e., light that has predefined characteristics.

The light generation device may for example comprise a LED for emitting light. It is understood, that for a specific current carrying capacity a respective LED that emits respective light may be installed in the first electrical connector. If the characteristics of the emitted light are determined simply by choosing a respective LED, the same type of LED may be used for all first electrical connectors and respective charging cables that comprise the same current carrying capacity. Further, no complex active controller is required for such a light source. It is understood, however, that the light generation device may comprise further electrical components required to drive such a LED like e.g., resistors, filters, voltage regulators and the like.

In the second electrical connector, the light sensor may sense the light, and a controller coupled to the light sensor may determine the maximum output power for the second electrical connector based on the sensed light.

The light sensor may for example comprise one or more photo diodes that sense the light that is emitted by the light generation device and provide a respective output signal to the controller. The controller determines the maximum output power for the second electrical connector, which reflects the current carrying capacity of the first electrical connector, based on the characteristics of the light sensed by the light sensor. After determining the maximum output power, the controller may provide this information to a power source that provides the second electrical connector with electrical power. The power source may then limit the maximum output power to the respective value. Especially when charging an electrical vehicle, other factors that may be communicated e.g., between the charging station and the vehicle, may also influence the output power of the charging station and result in an even lower output power during charging. The maximum output power will however be limited to the determined value to prevent any damage to the first electrical connector and the charging cable.

With the present invention it is possible, to easily determine the current carrying capacity for a respective charging cable that is used to charge an electrical vehicle. The circuitry required in the first electrical connector may be a passive circuitry without active control circuits and may therefore easily be implemented in the first electrical connector. At the same time, the receiving circuit in the second electrical connector also is of very low complexity.

Since the emitted light is transmitted via and evaluated in the first and second contact spaces, when the first electrical connector and the second electrical connector are coupled to each other, the detection is very robust against interferences.

Further embodiments of the present disclosure are subject of the further dependent claims and of the following description, referring to the drawings.

In an embodiment, the light generation device may be coupled to the first electrical contacts and may be configured to receive electrical supply energy via the first electrical contacts.

The light generation device may be coupled e.g., to two of the first electrical contacts and may be provided with electrical supply energy to emit the light via these first electrical contacts. It is understood, that the first electrical connector comprises a plurality of first electrical contacts, wherein different contacts may be provided for different voltages, currents and power levels. For example, the first electrical connector may comprise a positive high-power electrical contact and a negative high-power electrical contact. In addition, the first electrical connector may comprise electrical low-power and/or data contacts. The light generation device may in such an embodiment be coupled to the electrical low-power and/or data contacts.

The second electrical connector or the power supply coupled to the second electrical connector may provide such electrical low-power and/or data contacts with electrical power prior to providing electrical power to high-power electrical contacts. Therefore, the determination of the current carrying capacity and the maximum output power may be determined prior to providing high amounts of electrical power to the first electrical connector.

As alternative the light generation device may be supplied with electrical supply energy via the other end of the cable or an electrical device to which the first electrical connector is coupled to, for example an electrical vehicle.

In another embodiment, the light generation device may be configured to emit light with a predetermined light intensity. The light sensor may be configured to sense the light intensity of the light, and the controller may be configured to determine the maximum output power based on the sensed light intensity.

The light intensity may be defined according to a current carrying capacity of the first electrical connector or the cable or electrical device, like an electric vehicle, connected to the first electrical connector.

The light intensity may simply be determined by providing the light generation device with a respective input power. In case of the light generation device comprising a LED, the light intensity may be fixed to the predetermined light intensity by providing a respective driving current to the LED. To this end, either a simple series resistor with the respective resistance may be used or a dedicated current source with the respective output current may be used.

The light sensor may for example be a photo diode that may provide an output signal that represents the received light intensity.

In another embodiment, the light generation device may be configured to emit light with a predetermined light color. The light sensor may be configured to sense a light color of the sensed light, and the controller may be configured to determine the maximum output power based on the sensed light color.

As with the light intensity, the light color may be defined according to the current carrying capacity of the first electrical connector or the cable or electrical device connected to the first electrical connector. The light color may simply be defined by providing a light source with the respective color, for example a red LED, a green LED, a blue LED, or the like. A respective current carrying capacity may be assigned to each color.

The light sensor may comprise respective sensor elements, like for example photo diodes with respective color filters that allow determining if light of a respective color is present or not.

Detecting the color of the light may make the detection more robust, since the intensity of emitted light may be modified e.g., by dirt on the light emitter or the light sensors.

In another embodiment, the light generation device may be configured to emit light with a predetermined frequency and/or a predetermined duty cycle. The light sensor may be configured to sense a frequency of the sensed light, and the controller may be configured to determine the maximum output power based on the sensed frequency.

The term frequency in this regard does not refer to the frequency of the light waves, instead frequency in this regard refers to a modulation frequency used for turning on and off the light. It is understood, that the modulation may also comprise a predetermined duty cycle, like in a PWM signal. To generate light of a predetermined frequency and/or duty cycle in the light generation device, a simple oscillator circuit e.g., based on a 555 timer component or a programable component, like a processor or controller, may be used.

As with the light intensity and the light color the frequency may be defined according to a current carrying capacity of the first electrical connector or the cable or electrical device connected to the first electrical connector.

In the second electrical connector the light sensor may determine the frequency of the sensed light e.g., with a frequency to voltage converter, or with a timer/counter-based component.

It is understood, that the frequency determination part may also be provided in the controller. In such an embodiment, the light sensor provides a raw signal to the controller and the controller evaluates the signal.

Detecting the frequency of the light also makes the detection more robust, since the intensity of emitted light may be modified e.g., by dirt on the light emitter or the light sensors.

In a further embodiment, the first electrical connector may comprise a switch coupled to an electrical supply input of the light generation device and configured to close an electrical contact for the electrical supply input if the first electrical connector is coupled to the second electrical connector.

The switch may serve for determining when the first electrical connector is coupled to the second electrical connector. Especially, in embodiments, in which the first electrical connector is coupled to a cable that may already be powered e.g. because it is connected on the other end to an electrical vehicle, light generation may be delayed with the switch until the first electrical connector is coupled to the second electrical connector.

In yet another embodiment, the second electrical connector may comprise a power supply coupled to the controller and to the second electrical contacts. The power supply may be configured to supply electrical power to the second electrical contacts according to the determined maximum output power.

As explained above, determining the maximum output power serves for protecting the first electrical connector or the attached cable from overload. Therefore, after determining this information in the second electrical connector, the power source supplying the second electrical connector with electrical power may be configured accordingly.

It is understood, that the second electrical connector may be provided in an electrical device, like e.g. a charging station for electrical vehicles. In such an embodiment, the mechanical parts, like the second outer enclosure may be provided integrally with an enclosure of the respective electrical device. Further, elements described herein as being part of the second electrical connector, in such an embodiment may be provided in the electrical device and may be coupled to the second electrical connector.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a block diagram of an embodiment of a first electrical connector according to the present disclosure;
Figure 2 shows a perspective view of another embodiment of a first electrical connector according to the present disclosure;
Figure 3 shows a sectional view of the embodiment of a first electrical connector of Figure 2;
Figure 4 shows a block diagram of an embodiment of a second electrical connector according to the present disclosure;
Figure 5 shows a sectional view of an embodiment of a second electrical connector according to the present disclosure;
Figure 6 shows a block diagram of an embodiment of a charging station with an embodiment of a second electrical connector according to the present disclosure; and
Figure 7 shows a flow diagram of an embodiment of a method according to the present disclosure.

In the figures like reference signs denote like elements unless stated otherwise.

### DETAILED DESCRIPTION OF THE DRAWINGS

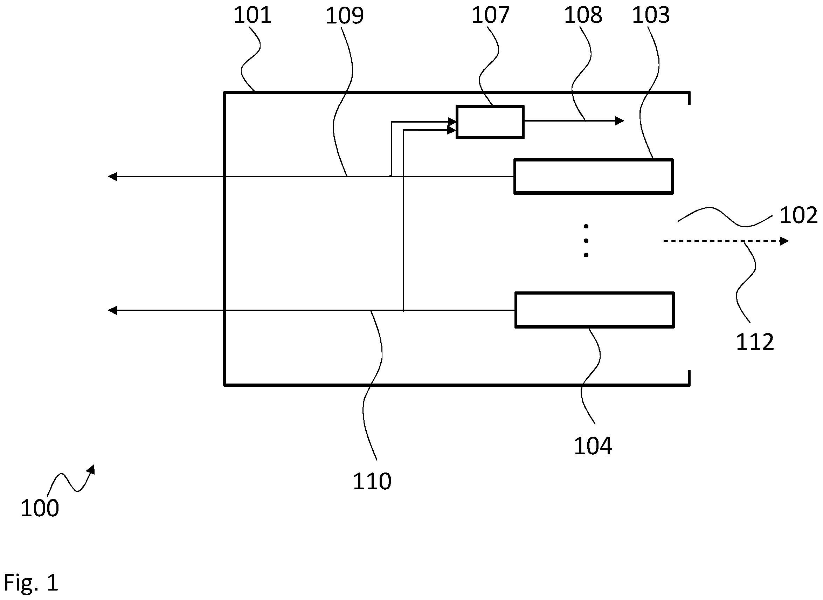

Figure 1 shows a block diagram of a first electrical connector 100. The first electrical connector 100 comprises a first outer enclosure 101 that surrounds a first contact space 102 with an opening in longitudinal direction 112 of the first electrical connector 100.

The first outer enclosure 101 surrounds the first contact space 102 such that and a number of first electrical contacts 103, 104 can be arranged in the first contact space 102. In the first electrical connector 100 two first electrical contacts 103, 104 are shown.

However, more possible electrical contacts are hinted at by three dots. Generally, any number of contacts required by the respective application may be provided in the first electrical connector 100.

Further, a light generation device 107 is arranged in the first contact space 102 such that light emitted by the light generation device 107 is emitted at least in part in the direction of the opening of the first contact space 102. The light generation device 107 is exemplarily coupled to the wires of the first electrical contacts 103, 104 and receives electrical supply energy via the first electrical contacts 103, 104.

The light generation device 107 may emit light 108 with a predetermined light intensity and/or light color. In addition, or as alternative, the light generation device 107 may emit light 108 with a predetermined frequency and/or a predetermined duty cycle.

Although not explicitly shown, the first electrical connector 100 may comprise a switch coupled to an electrical supply input of the light generation device 107 that closes an electrical contact for the electrical supply input if the first electrical connector 100 is coupled to a respective second electrical connector.

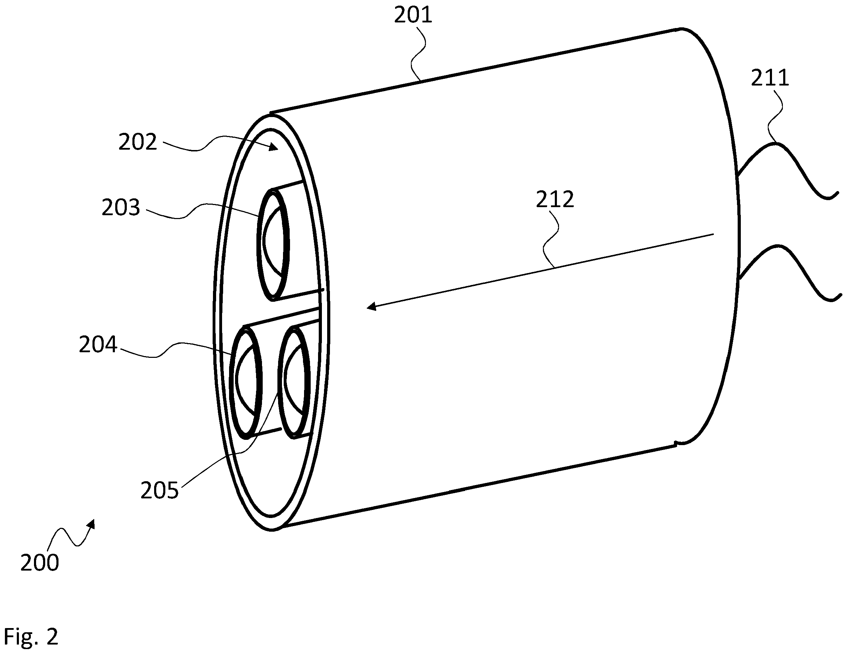

Figure 2 shows a perspective view of another first electrical connector 200. The first electrical connector 200 is based on the first electrical connector 100. Therefore, the first electrical connector 200 also comprises a first outer enclosure 201 that surrounds a first contact space 202 that comprises an opening in longitudinal direction 212. The first outer enclosure 201 accommodates three first electrical contacts 203, 204, 205. On the side of the first outer enclosure 201 opposite to the opening a cable 211 is provided, that is internally coupled to the first electrical contacts 203, 204, 205.

Again, it is understood, that the number of three first electrical contacts 203, 204, 205 is just exemplarily chosen and that any other number of first electrical contacts is possible.

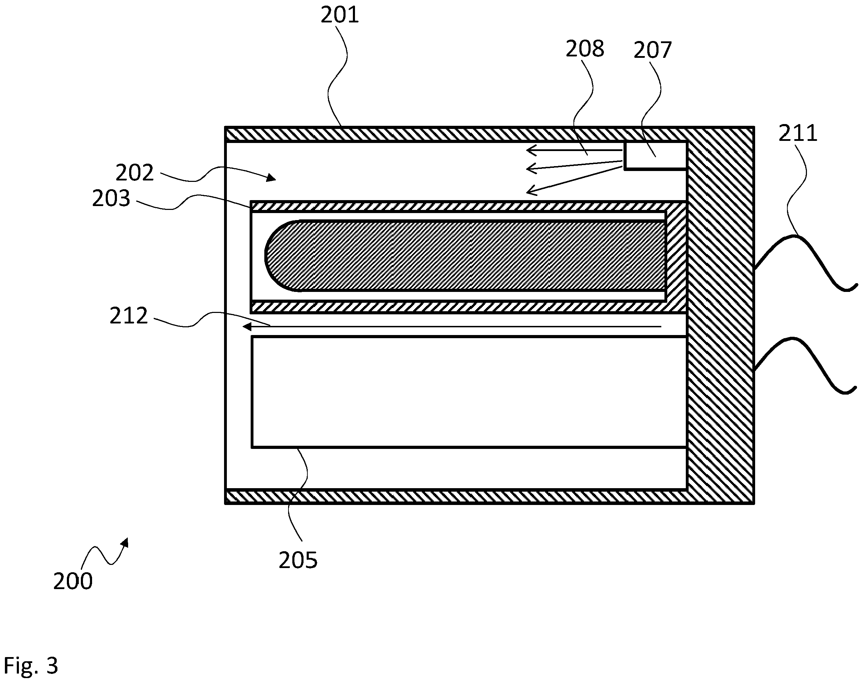

Figure 3 shows a sectional view of the first electrical connector 200. In the first contact space 202 the light generation device 207 is provided at an inner wall at the back of the first contact space 202 such that the emitted light is oriented to the opening of the first contact space 202.

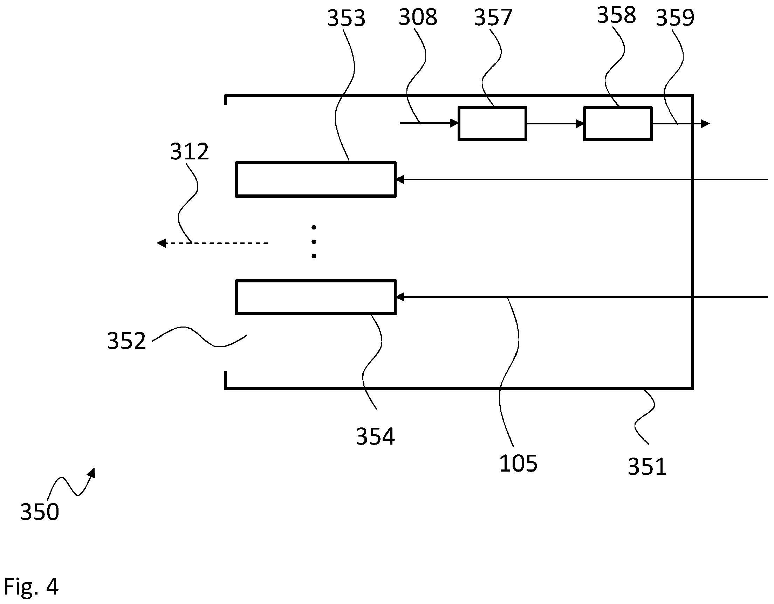

Figure 4 shows a block diagram of a second electrical connector 350 that may be coupled to a respective first electrical connector. The second electrical connector 350 comprises a second outer enclosure 351 that surrounds a second contact space 352. In the second contact space 352 two second electrical contacts 353, 354 are provided. Further second electrical contacts are hinted at by three dots. It is understood, that any number of second electrical contacts 353, 354 is possible.

The second electrical connector 350 further comprises a light sensor 357 that is arranged in the second contact space 352. Further, a controller 358 is provided that is coupled to the light sensor 357.

For determining a maximum output power 359 for the second electrical connector 350, the light sensor 357 senses light 308, that is emitted from the light generation device in a respective first electrical connector, if the second electrical connector 350 is connected to the first electrical connector. The controller 358 then determines the maximum output power 359 based on the sensed light 308, and may provide this information for example to a power source of a charging station for electrical vehicles.

The light sensor 357 may sense the light intensity of the light 308 and the controller 358 may determine the maximum output power 359 based on the sensed light intensity. In addition, or as alternative, the light sensor 357 may sense a light color of the sensed light 308 and the controller 358 may determine the maximum output power 359 based on the sensed light color. Further, in addition, or as alternative, the light sensor 357 may sense a frequency of the sensed light 308 and the controller 358 may determine the maximum output power 359 based on the sensed frequency.

Although not explicitly shown, the second electrical connector 350 may comprise a power supply coupled to the controller 358 and to the second electrical contacts 353, 354, 453. The power supply may supply electrical power to the second electrical contacts 353, 354 according to the determined maximum output power 359 determined by the controller 358.

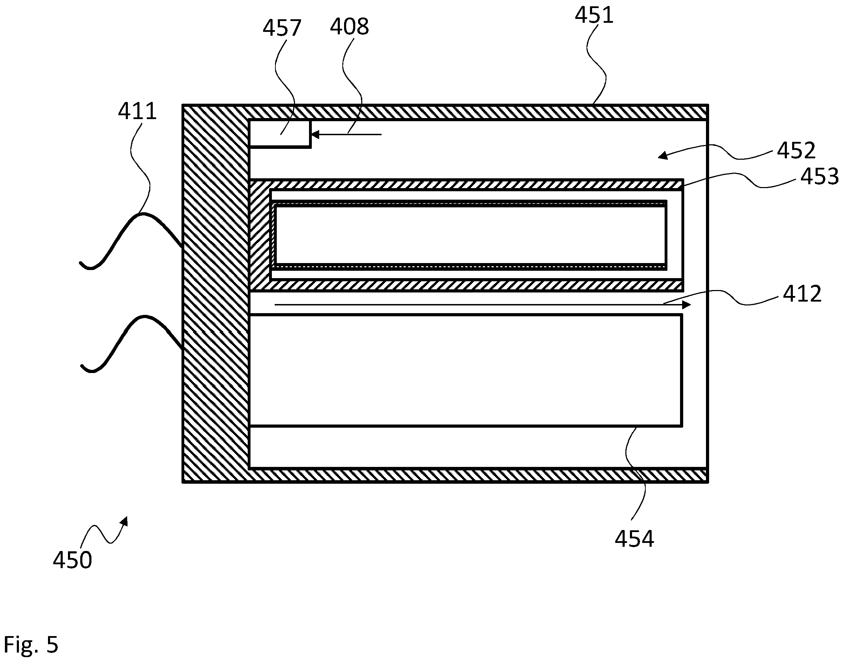

Figure 5 shows a sectional view of a second electrical connector 450. The second electrical connector 450 is based on the second electrical connector 350. Therefore, the second electrical connector 450 comprises a second outer enclosure 451 that surrounds a second contact space 452 with an opening in longitudinal direction 412. Three second electrical contacts 453, 454, of which only two are visible, are provided in the second contact space 452. A cable 411 is coupled to the end opposite of the opening to the second outer enclosure 451. Internally the wires of the cable 411 are coupled to the second electrical contacts 453, 454.

A light sensor 457 is provided inside of the second outer enclosure 451 on a back wall. The light sensor 457 receives light emitted by a light generation device of a first electrical connector, when the second electrical connector 450 is coupled to a respective first electrical connector and provides a respective signal to a controller (not shown in Figure 5).

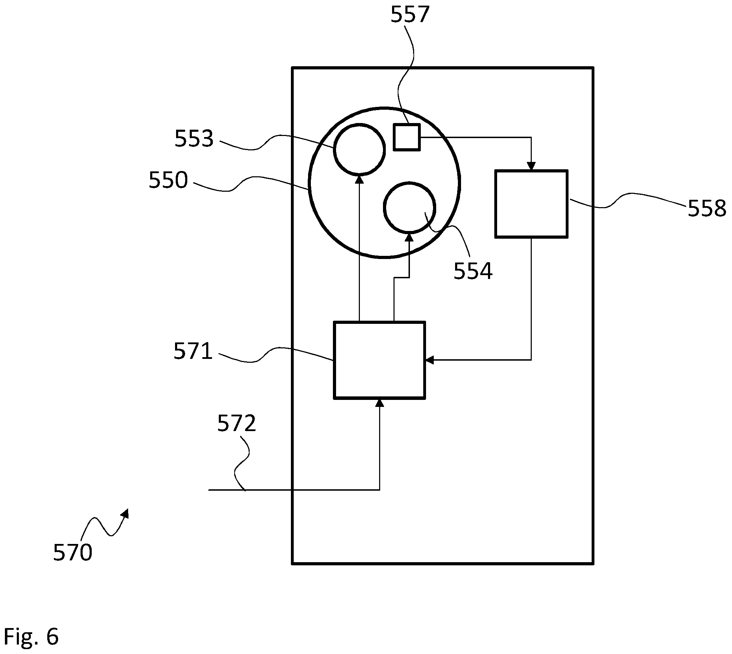

Figure 6 shows a block diagram of a charging station 570. The charging station 570 comprises a power source 571 that is supplied with electrical power via a mains power supply 572. The power source 571 is coupled to a second electrical connector 550 that is provided on the charging station 570 for charging electrical vehicles via a respective charging cable that comprises a respective first electrical connector, for example a connector as shown in Figures 1 to 3.

The second electrical connector 550 comprises two electrical connectors 553. 554 and a light sensor 557. The light sensor 557 senses light emitted by a light generation device in the first electrical connector of the charging cable and provides a respective signal to controller 558. In the charging station 570 the controller 558 is exemplarily provided outside of the second electrical connector 550.

The controller 558 evaluates the signal provided by the light sensor 557 and controls the power source 571 accordingly, to supply electrical power with a power level i.e., with a current and/or voltage, that is below the capacity of the charging cable.

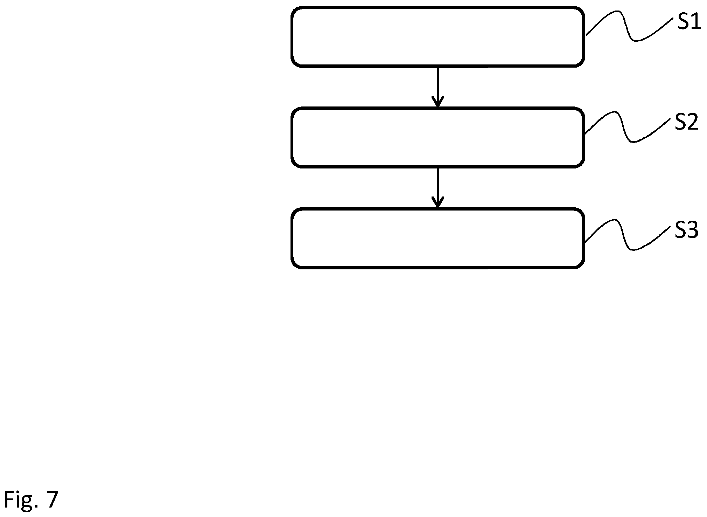

For sake of clarity in the following description of the method-based Fig. 7 the reference signs used above in the description of apparatus based Figs. 1 - 6 will be maintained.

Figure 7 shows a flow diagram of a method for determining a maximum output power 359 for providing electrical power from a second electrical connector 350, 450, 550 to a first electrical connector 100, 200.

The method comprises generating S1 light 108, 208, 308, 408 in a first outer enclosure 101, 201 of the first electrical connector 100, 200 that surrounds a first contact space 102, 202 and comprises an opening on a front side of the first electrical connector 100, 200 in longitudinal direction 112, 212 of the first contact space 102, 202, sensing S2 the generated light 108, 208, 308, 408 in a second outer enclosure 351, 451 of the second electrical contact 353, 354, 453, 454, 553, 554 that surrounds a second contact space 352, 452 and comprises an opening on a front side of the second electrical connector 350, 450, 550 in longitudinal direction 412 of the second contact space 352, 452, and determining S3 a maximum output power 359 from the second electrical connector 350, 450, 550 to the first electrical connector 100, 200 based on the sensed light 108, 208, 308, 408.

The light 108, 208, 308, 408 may be generated based on electrical supply energy that is received via first electrical contacts 103, 104, 203, 204, 205 arranged in the first contact space 102, 202 from second electrical contacts 353, 354, 453, 454, 553, 554 arranged in the second contact space 352, 452.

Further, there are different possibilities to characterize the current carrying capacity of the first electrical contact with the light 108, 208, 308, 408. The light 108, 208, 308, 408 may for example be emitted with a predetermined light intensity, and the light intensity may be sensed and the maximum output power 359 may be determined based on the sensed light intensity.

In addition, or as alternative, the light 108, 208, 308, 408 may be emitted with a predetermined light color, and the light color may be sensed and the maximum output power 359 may be determined based on the sensed light color.

Further, the light 108, 208, 308, 408 may be emitted with a predetermined frequency, and the frequency may be sensed and the maximum output power 359 may be determined based on the sensed frequency.

The method may also comprise activating an electrical supply for generating the light 108, 208, 308, 408 only if the first electrical connector 100, 200 coupled to the second electrical connector 350, 450, 550.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

### LIST OF REFERENCE SIGNS

- 100, 200: first electrical connector
- 101, 201: first outer enclosure
- 102, 202: first contact space
- 103, 104, 203, 204, 205: first electrical contact
- 107, 207: light generation device
- 108, 208, 308, 408: light
- 109, 110: wire
- 211, 411: cable
- 112, 212, 412: longitudinal direction

- 350, 450, 550: second electrical connector
- 351, 451: second outer enclosure
- 352, 452: second contact space
- 353, 354, 453, 454, 553, 554: second electrical contact
- 357, 457, 557: light sensor
- 358, 458, 558: controller
- 359: maximum output power

- 570: charging station
- 571: power source
- 572: mains power supply

## Claims

1. First electrical connector (100, 200) for coupling to a second electrical connector (350, 450, 550), the first electrical connector (100, 200) comprising:
a first outer enclosure (101, 201) that surrounds a first contact space (102, 202) and comprises an opening on a front side of the first electrical connector (100, 200) in longitudinal direction (112, 212) of the first contact space (102, 202);
a number of first electrical contacts (103, 104, 203, 204, 205) arranged in the first contact space (102, 202) and configured to couple to second electrical contacts (353, 354, 453, 454, 553, 554) of the second electrical connector (350, 450, 550); and
a light generation device (107, 207) arranged in the first contact space (102, 202) and configured to emitted light (108, 208, 308, 408) of a predetermined type.

2. First electrical connector (100, 200) according to claim 1, wherein the light generation device (107, 207) is coupled to the first electrical contacts (103, 104, 203, 204, 205) and is configured to receive electrical supply energy via the first electrical contacts (103, 104, 203, 204, 205).

3. First electrical connector (100, 200) according to any one of the preceding claims, wherein the light generation device (107, 207) is configured to emit light (108, 208, 308, 408) with a predetermined light intensity and/or light color.

4. First electrical connector (100, 200) according to any one of the preceding claims, wherein the light generation device (107, 207) is configured to emit light (108, 208, 308, 408) with a predetermined frequency and/or a predetermined duty cycle.

5. First electrical connector (100, 200) according to any one of the preceding claims, comprising a switch coupled to an electrical supply input of the light generation device (107, 207) and configured to close an electrical contact for the electrical supply input if the first electrical connector (100, 200) is coupled to the second electrical connector (350, 450, 550).

6. Second electrical connector (350, 450, 550) for coupling to a first electrical connector (100, 200), the second electrical connector (350, 450, 550) comprising:
a second outer enclosure (351, 451) that surrounds a second contact space (352, 452) and comprises an opening on a front side of the second electrical connector (350, 450, 550) in longitudinal direction (412) of the second contact space (352, 452);
a number of second electrical contacts (353, 354, 453, 454, 553, 554) arranged in the second contact space (352, 452) and configured to couple to first electrical contacts (103, 104, 203, 204, 205) of the first electrical connector (100, 200);
a light sensor (357, 457, 557) arranged in the second contact space (352, 452) and configured to sense light (108, 208, 308, 408) if the second electrical connector (350, 450, 550) is connected to a first electrical connector (100, 200); and
a controller (358, 458, 558) coupled to the light sensor (357, 457, 557) and configured to determine a maximum output power (359) based on the sensed light (108, 208, 308, 408).

7. Second electrical connector (350, 450, 550) according to claim 6, comprising a power supply coupled to the controller (358, 458, 558) and to the second electrical contacts (353, 354, 453, 454, 553, 554), wherein the power supply is configured to supply electrical power to the second electrical contacts (353, 354, 453, 454, 553, 554) according to the determined maximum output power (359).

8. Second electrical connector (350, 450, 550) according to any one of claims 6 and 7, wherein the light sensor (357, 457, 557) is configured to sense the light intensity of the sensed light (108, 208, 308, 408) and wherein the controller (358, 458, 558) is configured to determine the maximum output power (359) based on the sensed light intensity; and/or
wherein the light sensor (357, 457, 557) is configured to sense a light color of the sensed light (108, 208, 308, 408) and wherein the controller (358, 458, 558) is configured to determine the maximum output power (359) based on the sensed light color; and/or
wherein the light sensor (357, 457, 557) is configured to sense a frequency of the sensed light (108, 208, 308, 408) and wherein the controller (358, 458, 558) is configured to determine the maximum output power (359) based on the sensed frequency.

9. Method for determining a maximum output power (359) for providing electrical power from a second electrical connector 350, 450, 550 to a first electrical connector 100, 200, the method comprising:
generating (S1) light (108, 208, 308, 408) in a first outer enclosure (101, 201) of the first electrical connector (100, 200) that surrounds a first contact space (102, 202) and comprises an opening on a front side of the first electrical connector (100, 200) in longitudinal direction (112, 212) of the first contact space (102, 202);
sensing (S2) the generated light (108, 208, 308, 408) in a second outer enclosure (351, 451) of the second electrical contact (353, 354, 453, 454, 553, 554) that surrounds a second contact space (352, 452) and comprises an opening on a front side of the second electrical connector (350, 450, 550) in longitudinal direction (412) of the second contact space (352, 452); and
determining (S3) a maximum output power (359) from the second electrical connector (350, 450, 550) to the first electrical connector (100, 200) based on the sensed light (108, 208, 308, 408).

10. Method according to claim 9, wherein the light (108, 208, 308, 408) is generated based on electrical supply energy that is received via first electrical contacts (103, 104, 203, 204, 205) arranged in the first contact space (102, 202) from second electrical contacts (353, 354, 453, 454, 553, 554) arranged in the second contact space (352, 452).

11. Method according to any one of the preceding method-based claims, wherein the light (108, 208, 308, 408) is emitted with a predetermined light intensity, and wherein the light intensity is sensed and the maximum output power (359) is determined based on the sensed light intensity.

12. Method according to any one of the preceding method-based claims, wherein the light (108, 208, 308, 408) is emitted with a predetermined light color, and wherein the light color is sensed and the maximum output power (359) is determined based on the sensed light color.

13. Method according to any one of the preceding method-based claims, wherein the light (108, 208, 308, 408) is emitted with a predetermined frequency, and wherein the frequency is sensed and the maximum output power (359) is determined based on the sensed frequency.

14. Method according to any one of the preceding method-based claims, comprising activating an electrical supply for generating the light (108, 208, 308, 408) if the first electrical connector (100, 200) is coupled to the second electrical connector (350, 450, 550).
